(19) Europäisches Patentamt
European Patent Office
Office européen des brevets

(11) **EP 2 254 016 B1**

(12) **EUROPÄISCHE PATENTSCHRIFT**

(45) Veröffentlichungstag und Bekanntmachung des Hinweises auf die Patenterteilung:
**02.07.2014 Patentblatt 2014/27**

(51) Int Cl.:
***G05B 23/02*** *(2006.01)*

(21) Anmeldenummer: **10162747.9**

(22) Anmeldetag: **12.05.2010**

(54) **Verfahren und Einrichtung zur Identifikation von Korrelationen zwischen Alarmmeldungen oder zwischen Alarmmeldungen und Bedieneingriffen**

Method and device for identifying correlations between alarm messages or between alarm messages and operator interventions

Procédé et dispositif d'identification de corrélations entre des notifications d'alarme ou entre des notifications d'alarme et des prises de commande

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **18.05.2009 DE 102009021774**

(43) Veröffentlichungstag der Anmeldung:
**24.11.2010 Patentblatt 2010/47**

(73) Patentinhaber: **ABB Technology AG**
**8050 Zürich (CH)**

(72) Erfinder:
• **Borchers, Hans-Werner**
**69121 Heidelberg (DE)**
• **Hollender, Dr. Martin**
**69221 Dossenheim (DE)**

(74) Vertreter: **Kock, Ina et al**
**ABB AG**
**GF-IP**
**Wallstadter Straße 59**
**68526 Ladenburg (DE)**

(56) Entgegenhaltungen:
**WO-A1-02/086750    US-B1- 6 766 368**

• **SIZU HOU ET AL: "Analysis and Research for Network Management Alarms Correlation Based on Sequence Clustering Algorithm", INTELLIGENT COMPUTATION TECHNOLOGY AND AUTOMATION (ICICTA), 2008 INTERNATIONAL CONFERENCE ON, IEEE, PISCATAWAY, NJ, USA, 20. Oktober 2008 (2008-10-20), Seiten 982-986, XP031354404, ISBN: 978-0-7695-3357-5**
• **MAHANTI A ET AL: "Visual Interface for Online Watching of Frequent Itemset Generation in Apriori and Eclat", MACHINE LEARNING AND APPLICATIONS, 2005. PROCEEDINGS. FOURTH INTERNATI ONAL CONFERENCE ON LOS ANGELES, CA, USA 15-17 DEC. 2005, PISCATAWAY, NJ, USA,IEEE, 15. Dezember 2005 (2005-12-15), Seiten 404-410, XP010902795, DOI: 10.1109/ICMLA.2005.68 ISBN: 978-0-7695-2495-5**
• **Kurz, Hans Dr.: "Alarmmanagement - Ziele, Erfahrungen, Nutzen", ATP Automatisierungstechnische Praxis, Bd. ATP, Nr. 02/2008 28. Februar 2008 (2008-02-28), Seiten 86-90, XP002663028, Gefunden im Internet: URL: http://www.namur.de/fileadmin/media/Pr essespiegel/atp/atp_ 02_2008_Alarmmanagemen t.pdf [gefunden am 2011-11-08]**

**Beschreibung**

Die Erfindung bezieht sich auf ein Verfahren und eine Einrichtung zur Identifikation von Korrelationen zwischen Alarmmeldungen eines Alarmsystems einer technischen Anlage oder eines technischen Prozesses und/oder Korrelationen zwischen solchen Alarmmeldungen und Bedieneingriffen.

Alarmsysteme sind wesentliche Einrichtungen von Überwachungssystemen oder Leitsystemen technischer Anlagen, wie beispielsweise Kraftwerksanlagen oder Produktionsanlagen, und sie sind wichtiges Hilfsmittel für das Betriebspersonal, um Anlagen- oder Prozesszustände, die einen unmittelbaren Eingriff erfordern, zu erkennen. Die Arbeitsweise der Alarmsysteme zur Ermittlung und Anzeige von Anlagen- oder Prozesszuständen wird durch Alarmmeldungen bestimmt, also beispielsweise durch - im Rahmen einer Alarmkonfiguration - festgelegte Grenzwerte von Prozessvariablen. Diese Alarmmeldungen werden den Bedienern der Anlagen in verschiedenster Weise zur Verfügung gestellt.

Da sowohl einzelne Komponenten als auch Teilsysteme eines Leitsystems dafür eingerichtet sind Alarme zu generieren, also eine große Anzahl von Alarmen auftreten kann, müssen Alarmsysteme so gestaltet werden, dass sie wirkungsvoll arbeiten. Sie sollen Betriebspersonal auf gefährliche Situationen aufmerksam machen und Schritte zur Vermeidung oder Behebung von Gefahrensituationen vorschlagen. Mittels solcher Schritte soll der jeweilige Prozess in den Normalbetrieb zurückgeführt werden. Wenn während schwieriger Situationen zu viele Alarme generiert werden, wird das Betriebspersonal möglicherweise verwirrt, und tatsächlich wichtige Alarme können in der Alarmflut unerkannt oder unbeachtet bleiben. Dieser Sachverhalt ist seit langem bekannt, sowie auch vielfältige Bemühungen zur Optimierung von Alarmsystemen.

So sind beispielsweise kommerzielle Alarmanalyse-Pakete bekannt, um durch Analyse aufgezeichneter historischer Daten KPIs (Key Performance Indicators) zu generieren, die helfen können, Alarmsysteme zu optimieren. Mit Hilfe solcher Analysen können beispielsweise aus historischen Aufzeichnungen häufigste Alarme ermittelt werden, sowie flatternde Alarme, die häufig in sehr kurzen Zeitintervallen auftreten, oder auch einfache Korrelationen, wobei gezählt wird, wie häufig zwei Alarme in kurzen Intervallen zusammen auftreten.

Wenn Alarmsysteme eingerichtet oder überarbeitet werden, erfolgt die Konfiguration meistens manuell und ausgehend von Prozesskenntnissen und einfachen Statistiken. Dabei sind jedoch die Möglichkeiten, Erfahrungen des Betriebspersonals oder Erkenntnisse aus gespeicherten Alarmereignissen zu nutzen sehr begrenzt. Eines der Hauptziele kontinuierlicher Verbesserungsbemühungen ist die Reduzierung der Alarmzahl, insbesondere auch in schwierigen Situationen, beispielsweise unter die von der EEMUA (Engineering Equipment and Materials Users' Association) empfohlenen Grenzen. Es versteht sich, dass trotzdem wesentliche Alarme nicht unterdrückt werden dürfen.

Aus Sizu Hou et al.:"Analysis and Research for Network Management Alarms Correlation Based on Sequence Clustering Algorithm" ist es bekannt, Alarmassoziierungen mittels einer sequenziellen Mustererkennung aufzufinden, entsprechende Korrelationsregeln zu ermitteln und auf Basis der Korrelationsregeln Netzwerkalarme zu filtern und zu unterdrücken.

In Dr. Hans Kurz: "Alarmmanagement - Ziele, Erfahrungen, Nutzen" wird beschrieben, wie Alarmfluten und bedeutungslose und unnötige Alarme vermieden werden können, indem ein Alarm-Management-Team im Rahmen von wöchentlichen Durchsprachen der häufigsten Alarme der letzten Woche die Häufigkeit von Alarmen und Bedieneingriffen analysiert und entscheidet, ob Alarme ganz entfallen können oder in bestimmten Situation unterdrückt werden sollten.

Mahanti A et al.: "Visual Interface for Online Watching of Frequent Itemset Generation in Apriori and Eclat" behandelt die beiden Datamining-Algorithmen Apriori und Eclat.

Davon ausgehend liegt der Erfindung die Aufgabe zugrunde, ein Verfahren und eine zur Durchführung geeignete Einrichtung anzugeben, womit eine weitere Reduzierung der Menge von Alarmen aus Messwerten, Prozessgrößen und/oder Zustandsmeldungen einer technischen Anlage oder eines technischen Prozesses durch verbesserte Nutzung von Erfahrungen aus früheren Alarmereignissen und Prozesszuständen bei der Konfiguration von Alarmsystemen erreichbar ist.

Diese Aufgabe wird erfindungsgemäß durch ein Verfahren zur Identifikation von Zusammenhängen, auch als Korrelationen bezeichnet, zwischen Alarmmeldungen eines Alarmsystems einer technischen Anlage oder eines technischen Prozesses und/oder Zusammenhänge zwischen solchen Alarmmeldungen und Bedieneingriffen mit den in Anspruch 1 angegebenen Merkmalen gelöst. Vorteilhafte Ausgestaltungen und Verbesserungen des erfindungsgemäßen Verfahrens sowie eine Einrichtung zur Durchführung des Verfahrens sind in weiteren Ansprüchen und in der Beschreibung angegeben.

Mit der Erfindung wird demnach vorgeschlagen, unter Einsatz einer Datenverarbeitungseinrichtung, die Zugriff auf Alarmmeldungen und Bedieneingriffe betreffende historische Daten hat, unter Anwendung von Methoden der Warenkorbanalyse in definierten Zeitintervallen liegende historische Daten als Warenkorb zu behandeln sowie zu analysieren und/oder mittels der Datenverarbeitungseinrichtung, die Zugriff auf Alarmmeldungen und Bedieneingriffe betreffende aufgezeichnete historische Daten hat, aus Korrelationen zwischen Alarmmeldungen und Bedieneingriffen Qualitätskennzahlen aus dem Verhältnis der jeweiligen Bedieneingriffe vor und nach dem Auftreten der jeweiligen Alarmmeldung zu bilden.

Eine Einrichtung zur Durchführung des erfindungsgemäßen Verfahrens, mit der die Aufgabe weiterhin gelöst wird, ist dem Anspruch 8 zu entnehmen.

Die erfindungsgemäße Einrichtung umfasst eine Datenverarbeitungseinrichtung, die zur Durchführung von Analysen und Berechnungen zur Ermittlung von Korrelationen zwischen Alarmmeldungen eines Alarmsystems einer technischen Anlage oder eines technischen Prozesses und/oder Korrelationen zwischen solchen Alarmmeldungen und Bedieneingriffen Hardware- und Software-Mittel enthält, wobei die Datenverarbeitungseinrichtung

a) Zugriff auf Alarmmeldungen und Bedieneingriffe betreffende aufgezeichnete historische Daten hat,
b) unter Anwendung von Methoden der Warenkorbanalyse in definierten Intervallen liegende historische Daten als Warenkorb behandelt und analysiert, und/ oder
c) auf der Grundlage von Ergebnissen aus berechneten Korrelationen zwischen Bedieneingriffen und Alarmmeldungen Qualitätskennwerte ermittelt, die ein Maß dafür sind, inwieweit eine Alarmmeldung einen Bedieneingriff auslöst.

Die Datenverarbeitungseinrichtung ist auch dafür vorgesehen, die Ergebnisse der Analysen und Berechnungen mittels einer Anzeigevorrichtung zur Anzeige zu bringen.

Die weitere Beschreibung der Erfindung und deren Vorteile sowie deren Ausgestaltungen erfolgt nachstehend anhand von Ausführungsbeispielen, die in Zeichnungsfiguren dargestellt sind.

Es zeigen:

Fig. 1    beispielhafte Analyse- Ergebnisse, sowohl für eine Anwendung des APRIORI-Algorithmus, als auch des ECLAT-Algorithmus zur Analyse histori- scher Alarmmeldungen,

Fig. 2    eine spezielle Visualisierung zur Untersuchung von Beziehungen zwischen Alarmen, und

Fig. 3    beispielhaft eine Visualisierung der Nähe von Alarmen.

Die Erfindung geht von der Überlegung aus, dass eine deutliche Reduzierung erforderlicher, also zu konfigurierender Alarme möglich ist, wenn aus den historischen Alarmaufzeichnungen solche Alarme und Alarmsequenzen aufgefunden werden, die sehr häufig zusammen erscheinen. Wenn Zehntausende von Alarmmeldungen je Monat auftreten, ist es schwierig solche Analysen mittels Standardprozeduren und Suchmethoden durchzuführen, da der Untersuchungsraum exponentiell anwächst. Gelingt es beispielsweise herauszufinden, dass Alarm 1, Alarm 2 und Alarm 3 immer zusammen auftreten, könnte man in Erwägung ziehen zwei davon nicht anzuzeigen, da sie für einen Bediener keinen zusätzlichen Wert haben. Es könnte auch zweckmäßig sein, Alarm 3 nur dann zu zeigen, wenn zuvor Alarm 1 und Alarm 2 nicht aufgetreten sind.

Aus den Anwendungsgebieten des Data Mining sind beispielsweise die Aufgabe und Lösungstechniken bekannt, aus Millionen von aufgezeichneten Einkaufsfällen solche Produkte herauszufinden, die von Kunden in einem Supermarkt häufig zusammen gekauft werden. Dabei benutzte Methoden sind als "association mining" oder "market basket analysis" (Warenkorbanalyse) bekannt.

Die Warenkorbanalyse erfordert jedoch abgeschlossene Einheiten, die im Fall der Produktmengen eines jeweiligen Warenkorbs gegeben sind. Erfindungsgemäß wird deshalb als ein erster Schritt vorgeschlagen, über einen langen Zeitraum aufgezeichnete Datenströme, die Ereignisse und Alarme betreffen, so zu unterteilen, dass Datenmengen bestimmter Zeitabschnitten zur Analyse vorliegen. Erfolgreiche Analyse-Versuche wurden mit Daten in Zeitperioden durchgeführt, die auf unterschiedliche Weise gebildet wurden: Gemäß einer Variante a wurden Daten in nichtüberlappenden festgelegten Intervallen von beispielsweise 5 bis 20 Minuten Dauer herangezogen. Eine Variante b arbeitet mit überlappenden Intervallen einer festgelegten Länge, jeweils startend mit einem aufgezeichneten eintreffenden Alarm. Bei einer Variante c wird mit Intervallen unterschiedlicher Länge gearbeitet, wobei mindestens eine bestimmte Menge von Alarmen im Intervall enthalten ist.

Alarme jedes dieser Intervalle werden als eine Art Warenkorb bei der Anwendung von Algorithmen des sogenannten association mining behandelt, wie beispielsweise des APRIORI-Algorithmus oder ECLAT-Algorithmus.

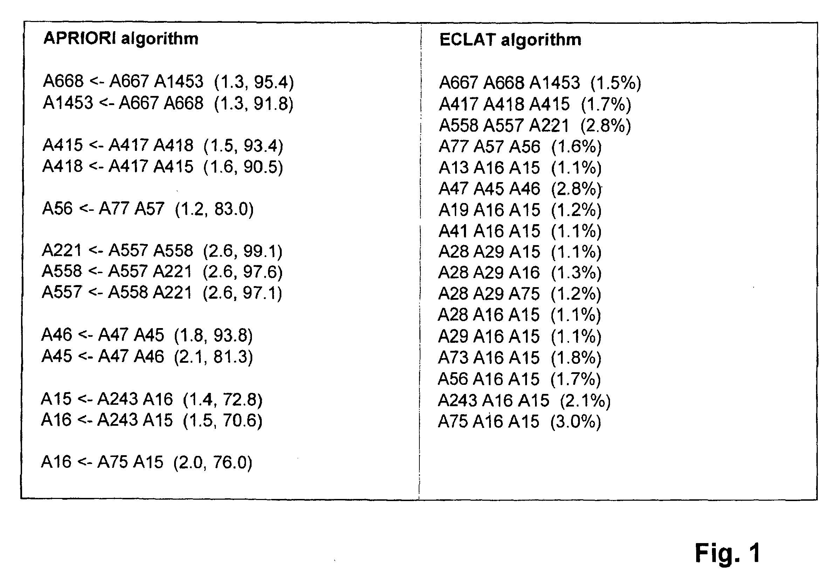

Fig. 1 zeigt als Tabelle beispielhafte Analyse-Ergebnisse, sowohl für eine Anwendung des APRIORI-Algorithmus, als auch des ECLAT-Algorithmus zur Analyse historischer Alarmmeldungen, wobei einige Tausend Alarme aus einer Zwei-Monats-Periode untersucht wurden. Zur Erläuterung, wie die Ergebniszeilen zu interpretieren sind, wird nachstehende Regel herausgegriffen:

$$A668 \leftarrow A667\ A1453\ (1.3,\ 95.4)$$

Die Alarme A668, A667 und A1453 erscheinen zusammen in 1,3 % des analysierten Intervalls, und in 95,4 % des Intervalls in welchem A667 und A1453 erscheinen, tritt auch A668 auf. Während ein gleichzeitiges Erscheinen von A667 und A668 natürlich sein mag, ist das beispielhaft erläuterte Ergebnis eher überraschend und kann zur weiteren Analys bezüglich Alarm A1453 genutzt werden.

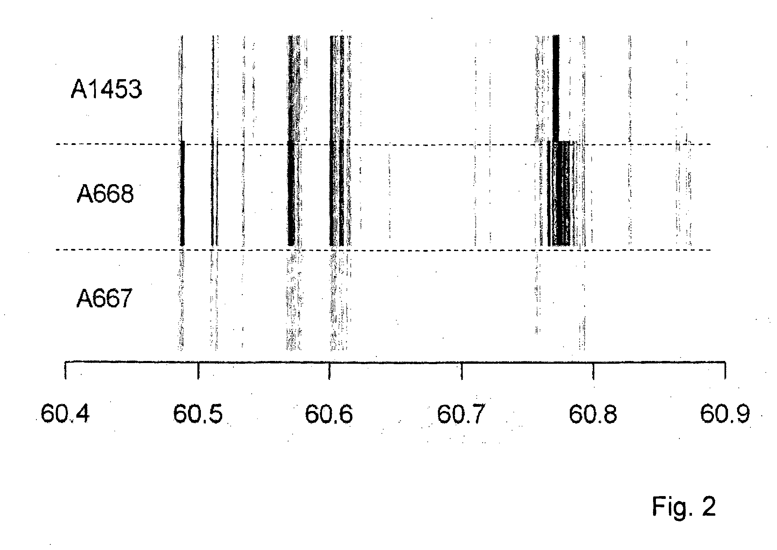

In einem zweiten Schritt wird eine in Fig. 2 dargestellte spezielle Visualisierung zur Untersuchung von Beziehungen zwischen den Alarmen benutzt. Dabei ist ein Abschnitt aus der auch Fig. 1 zugrundeliegenden Zwei-Monats-Periode dargestellt. Die Visualisierung gemäß Fig. 2 ist im Original eine deutlicher erkennbare farbige Darstellung. Gezeigt ist das Auftreten der Alarme A667, A668, und A1453 in der betrachteten Zeitperiode, woraus das gemeinsame Erscheinen dieser Alarme offensichtlich wird. Ohne Anwendung der erfindungsgemäßen Vorgehensweise wäre es kaum möglich derartige regelmäßige Zusammenhänge aus Tausenden von Alarmen zu erkennen. Die Visualisierung zeigt allein die hier interessierenden drei Alarme, und basiert auf Ergebnissen der vorausgegangenen statistischen Analyse.

In **Fig.** 2 wird für jeden an einer Regel beteiligten Alarm (hier A667, 668 und 1453) sein Auftreten in einer Zeitperiode (hier der 61. Beobachtungstag) durch einen senkrechten Strich zum gegebenen Zeitpunkt angezeigt, wobei jedem Alarm ein zur Zeitachse paralleler Streifen zugeordnet ist, um so das zeitlich nahe beieinander liegende Auftreten zu veranschaulichen. Jeder senkrechte Strich ist halbdurchsichtig gezeichnet, sodass bei häufigem Auftreten desselben Alarms in sehr kurzen Zeitabständen die Färbung deutlicher hervortritt.

Als möglicher dritter Schritt können in der Visualisierung gemäß Fig. 2 bestimmte zeitliche Regionen markiert werden, beispielsweise durch interaktives Ziehen eines Rechteckes mit einem Cursor. Daraufhin wird eine Vergrößerung des Bildes, auch als Zoom bezeichnet, auf diesen Zeitraum durchgeführt, und in einer gleichzeitig angezeigten Alarmliste, die alle Alarme des betrachteten Zeitabschnitts enthält, werden die Alarme A667, A668, und A1453 fett hervorgehoben.

Auf der Grundlage so gewonnener Kenntnisse über Zusammenhänge zwischen Alarmmeldungen oder zwischen Alarmmeldungen und Bedieneingriffen können Alarmunterdrückungsregeln formuliert werden, die im Rahmen einer Änderung einer Alarmkonfiguration angewendet werden können, um die Anzahl künftiger Alarmmeldungen zu reduzieren. Eine solche Regel könnte beispielsweise lauten: unterdrücke Alarm C, wenn Alarm A und Alarm B kurz vorher aufgetreten sind.

Vor einer Anwendung solcher Regeln ist eine Überprüfung deren Auswirkungen anhand aufgezeichneter historischer Alarmmeldungen und mittels sogenannter "what-if" Analysen möglich. Anhand einer solchen Überprüfung ist klar und gefahrlos erkennbar, wie sich solche Regeln ausgewirkt hätten, wenn sie schon früher benutzt worden wären. Beispielsweise können die bereits erwähnten KPIs, wie gemäß EEMUA191 vorgeschlagen, berechnet werden, um herauszufinden, welche Verbesserung die gebildeten Regeln im Fall der historischen Alarmmeldungen gebracht hätten.

Wenn Alarme in Alarmunterdrückungsregeln erscheinen, ist damit eine gewisse Nähe der Alarme definiert. Dies macht es möglich noch andere multivariate statistische Verfahren anzuwenden, womit die Abhängigkeitsstruktur mehrerer Alarme untersucht werden kann. Ausgangspunkt ist dabei dieselbe Datenstruktur, die auch für die Generierung der Assoziationsregeln benutzt wurde.

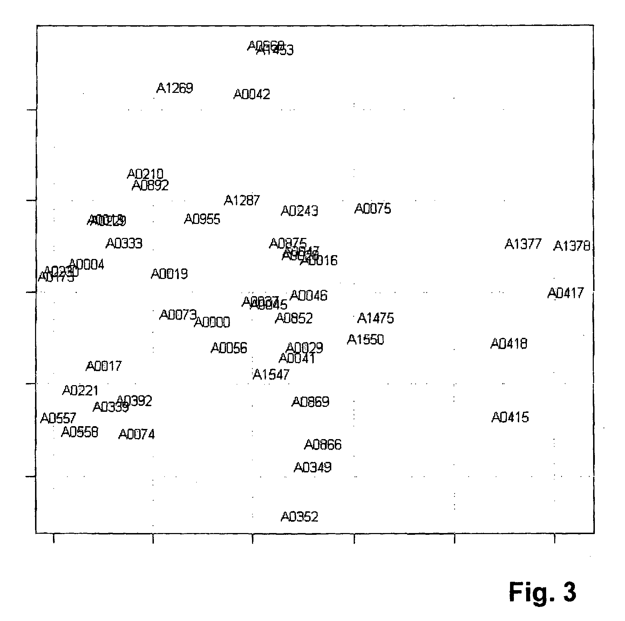

**Fig. 3** zeigt beispielhaft eine Visualisierung der Nähe von Alarmen. Eine solche Darstellung von Alarmen ist das Ergebnis einer Anwendung von Methoden der Multidimensionalen Skalierung (MDS). Die Multidimensionale Skalierung zeigt eine umfangreichere Abhängigkeit von Alarmen auf, als nur einen Zusammenhang von zwei Alarmen; so auch wie auch Alarme mit anderen Alarmen, die in anderen Regeln erscheinen, in Zusammenhang stehen. Ein solches Layout kann dazu genutzt werden, Bündel von Alarmen zu definieren, die zu Gruppen zusammengefasst werden können, oder beispielsweise wenigstens um Prioritäten der Alarme zu ändern.

Je nach Prozess oder Anlage kann es auch zweckmäßig sein, neben der Korrelation zwischen verschieden Alarmen auch die Korrelation zwischen Alarmen und Bedieneingriffen zu betrachten. Wenn Alarme auf Bedieneingriffe folgen, so kann dies auf Fehler der Anlagenfahrer hinweisen. Es kann aber auch sein, dass der Alarm falsch konfiguriert ist und erst so spät kommt, dass die notwendigen Bedieneingriffe bereits vorher offensichtlich waren. Wenn auf Alarme mit hoher Wahrscheinlichkeit Bedieneingriffe folgen, so weist dies darauf hin, dass es sich um gut konfigurierte Alarme handelt.

Diese Korrelationen können mit der bereits beschriebenen Warenkorbanalyse berechnet werden, indem jeder Warenkorb sowohl Alarme als auch Bedieneingriffe enthält. Die Korrelation zwischen Bedieneingriffe und Alarmen sollen für Bediener und Betriebsingenieure angezeigt werden. Die Korrelationswerte (wie in der vorab genannten Regel) können als Qualitätskennwerte für einzelne Alarme gesehen werden.

Gemäß einer vorteilhaften Ausgestaltung werden jedem Alarm zusätzliche Qualitätskennwerte zugeordnet, beispielsweise die Durchschnittsanzahl von Handlungen in einem bestimmten Intervall vor und nach einem Alarm, sowie eine Durchschnittsanzahl die angibt, wie oft ein Alarm aufgetreten ist, beispielsweise in einer Woche oder in einem Monat.

Ein Qualitätskennwert der Alarme mit darauf folgenden Bedieneingriffen verbindet, könnte wie folgt gestaltet sein:

- 0 bedeutet, dass ein Alarm keinerlei Wert für die Anlagenfahrer hatte,
- 1 bedeutet, dass jeder Alarm wertvoll für die Fahrer war, also einem Alarm stets ein Bedieneingriff folgte,
- ein Wert zwischen 0 und 1 bedeutet, dass dem Alarm teilweise Bedieneingriffe folgten, manchmal aber auch nicht.

Theoretisch sollte jeder Alarm mindestens einen Bedieneingriff auslösen. Mittels einer weiteren Ausgestaltung kann auf der Grundlage historischer Daten ermittelt werden, in welchem Maße ein Alarm einen Bedieneingriff ausgelöst hat. Dabei wird von einer Liste mit zeitgestempelten Alarmen, sowie einer entsprechenden Liste mit Bedieneingriffen ausgegangen. Dazu sind nachstehende Schritte geeignet.

1. Vorfilterung:

In einem Intervall sollte ein Ereignis nur einmal gezählt werden. Hat ein Alarm in kurzer Zeit mehrfach ausgelöst, wird nur der erste Alarm gezählt. Bei Bedieneingriffen kann es vorkommen, dass beispielsweise ein Sollwert in mehreren kurz aufeinander folgenden kleinen Bedienschritten eingestellt wird. Auch solche Bedieneingriffe werden nur einmal pro Intervall (typischerweise 5 oder 10 Minuten) gezählt.

2. Berechnung der Qualitätskennzahl:

■ Falls ein Alarm keinerlei Effekt hat, bedeutet dies, dass vor dem Alarm ähnlich viele Bedieneingriffe getätigt werden wie nach dem Alarm,
■ wenn ein Alarm Bedieneingriffe auslöst, so lassen sich nach dem Alarm mehr Eingriffe finden wie vor dem Alarm.

Bedieneingriffe werden vor und nach jedem Alarm für ein bestimmtes Intervall (z.B. 10 Minuten) gezählt. Eine Option besteht darin, die

Handlungen je nach Abstand zu dem Alarm zu gewichten, beispielsweise mit exp(-a*t), mit einer geeignet gewählten Konstante a. Eine entsprechende Vorfilterung ist dabei wichtig. Wenn dem Bedieneingriff keine Alarmmeldung vorausgeht, wird der Wert auf 0.1 gesetzt.

Wenn $d1$ und $d2$ gewichtete Alarmzahlen vor bzw. nach dem Bedieneingriff sind, kann eine geeignete Transformation zur Bildung eines Qualitätswertes genutzt werden. Ein Beispiel wäre eine Sigmoid-Funktion. Das ist der Ausdruck $1/(+\exp(1-d))$ wenn $d>=1$ und $0.5*d$ sonst, wobei $d=d2/d1$ ist. Andere Ausdrucksformen sind möglich, wenn ein mehr oder weniger großer Einfluss auf den Qualitätswert gewünscht wird.

3. Nutzung der Qualitätskennzahl zur Verbesserung der Mensch-Maschine-Schnittstelle:

a. Entfernung von Alarmen mit niedriger Qualitätskennzahl. Solche Alarme sollten von einem Leittechniker überprüft und gegebenenfalls entfernt werden. Die Qualitätskennzahl hilft Leittechnikern sich auf Schwachstellen zu konzentrieren wodurch der Konfigurationsänderungsprozess beschleunigt wird im Vergleich zu einer Überprüfung aller konfigurierten Alarme.
b. Direkte Anzeige der Qualitätskennzahl als Information für Bediener.
c. Hervorheben von Alarmen/Signalen mit hoher Qualitätskennzahl. Beispielsweise durch

i. Darstellen einer speziellen Alarmliste, die allein Alarme mit hoher Qualitätskennzahl enthält,

ii. Ein spezielles akustisches Signal geben, wenn ein solcher Alarm eintritt, und
iii. Eine spezielle Anzeige, die Trends für die wichtigsten Alarme aufzeigt, oder die betroffenen Signale in einer Massen-Datenanzeige hervorheben.

Eine Datenverarbeitungseinrichtung zur Durchführung des Verfahrens weist Hardware- und Software-Mittel zur Durchführung der erläuterten Analysen und Berechnungen auf, sowie zur Anzeige der Ergebnisse und zur Durchführung einer Überprüfung der Auswirkung von Regeln, die auf der Grundlage der Erkenntnisse aus Analyse-Ergebnissen gebildet wurden.

Die Datenverarbeitungseinrichtung hat Zugriff auf Alarmmeldungen und Bedieneingriffe betreffende aufgezeichnete historische Daten, weiterhin ist die Datenverarbeitungseinrichtung dafür vorgesehen, unter Anwendung von Methoden der Warenkorbanalyse in definierten Intervallen liegende historische Daten als Warenkorb zu behandeln und zu analysieren und/oder auf der Grundlage von Ergebnissen aus berechneten Korrelationen zwischen Bedieneingriffen und Alarmmeldungen Qualitätskennwerte zu ermitteln, die ein Maß dafür sind, inwieweit eine Alarmmeldung einen Bedieneingriff auslöst.

## Patentansprüche

1. Verfahren zur Reduzierung der Menge von aus Messwerten, Prozessgrößen und/oder Zustandsmeldungen eines Alarmsystems einer technischen Anlage oder eines technischen Prozesses generierten Alarmmeldungen, mit den Schritten

• Zugreifen auf historische Daten, welche Alarmmeldungen und Bedieneingriffe betreffen,
• Identifikation von Zusammenhängen zwischen den Alarmmeldungen und zwischen den Alarmmeldungen und den Bedieneingriffen unter Anwendung von Methoden der Warenkorbanalyse, wobei

◦ die in definierten Intervallen liegenden historischen Daten als Warenkorb behandelt und analysiert werden,
◦ eine Abhängigkeitsstruktur mehrerer Alarme untersucht wird durch Anwendung von Methoden der Multidimensionalen Skalierung (MDS) zum Aufzeigen einer mehr als nur einen Zusammenhang zwischen zwei Alarmen umfassenden Abhängigkeit von Alarmen, und
◦ entsprechende Bündel von Alarmen definiert und zu Gruppen zusammengefasst werden,

• Formulierung von Alarmunterdrückungsregeln zur Reduzierung der Anzahl künftiger Alarmmeldungen auf der Grundlage der so gewonnenen Kenntnisse über die Zusammenhänge zwischen den Alarmmeldungen und zwischen den Alarmmeldungen und den Bedieneingriffen, und
• Reduzierung der Anzahl der Alarmmeldungen durch Anwendung der Alarmunterdrückungsregeln im Rahmen einer Änderung einer Konfiguration des Alarmsystems.

2. Verfahren nach Anspruch 1, **dadurch gekennzeichnet, dass** aus den Zusammenhängen zwischen Alarmmeldungen und Bedieneingriffen Qualitätskennzahlen aus dem Verhältnis der jeweiligen Bedieneingriffe vor und nach dem Auftreten der jeweiligen Alarmmeldung gebildet werden.

3. Verfahren nach einem der vorherigen Ansprüche, **dadurch gekennzeichnet, dass** die Ergebnisse der Analysen zur Anzeige gebracht werden.

4. Verfahren nach einem der vorherigen Ansprüche, **dadurch gekennzeichnet, dass** die Intervalle gebildet werden durch Unterteilung der aufgezeichneten Daten in nicht überlappende Perioden einer festgelegten Dauer, oder in zeitlich überlappende Perioden einer festgelegten Dauer, die jeweils mit einem aufgezeichneten Alarm beginnt, oder in Intervalle unterschiedlicher Dauer, jeweils eine festgelegte Anzahl von Alarmmeldungen enthaltend.

5. Verfahren nach einem der vorherigen Ansprüche, **dadurch gekennzeichnet, dass** die Analyse der historischen Daten unter Verwendung des APRIORI- Algorithmus oder ECLAT- Algorithmus durchgeführt wird.

6. Verfahren nach einem der vorherigen Ansprüche, **dadurch gekennzeichnet, dass** nach der Definition der Alarmunterdrückungsregeln auf der Grundlage der Analyseergebnisse, mittels der Datenverarbeitungseinrichtung eine programmgesteuerte Überprüfung der Auswirkungen der definierten Regeln durchgeführt wird, wobei geprüft wird, welche Wirkungen die Regeln im Fall der aufgezeichneten Daten gehabt hätten, insbesondere welche Reduzierung der Anzahl von Alarmmeldungen sich ergeben hätte.

7. Verfahren nach einem der vorherigen Ansprüche, **dadurch gekennzeichnet, dass** auf der Grundlage von Ergebnissen aus ermittelten Korrelationen zwischen Bedieneingriffen und Alarmmeldungen Qualitätskennwerte ermittelt werden, die ein Maß dafür sind, inwieweit eine Alarmmeldung einen Bedieneingriff auslöst.

8. Verfahren nach Anspruch 7, **dadurch gekennzeichnet, dass** die Bildung eines Qualitätskennwerts in nachstehenden Schritten erfolgt:

a) Durchführung einer Vorfilterung der historischen Daten, wobei kurzzeitig nacheinander auftretende Alarmmeldungen als eine Alarmmeldung und kurzzeitig aufeinander folgende Bedieneingriffe als ein Bedieneingriff gezählt werden, und
b) Berechnung einer Qualitätskennzahl, die davon abhängt, ob eine Alarmmeldung einen Bedieneingriff auslöst.

9. Datenverarbeitungseinrichtung zur Reduzierung der Menge von aus Messwerten, Prozessgrößen und/oder Zustandsmeldungen eines Alarmsystems einer technischen Anlage oder eines technischen Prozesses generierten Alarmmeldungen, wobei die Datenverarbeitungseinrichtung Zugriff auf Alarmmeldungen und Bedieneingriffe betreffende, aufgezeichnete historische Daten hat und geeignet ist zur

• Identifikation von Zusammenhängen zwischen den Alarmmeldungen und zwischen den Alarmmeldungen und den Bedieneingriffen durch Anwendung von Methoden der Warenkorbanalyse, wobei

◦ die in definierten Intervallen liegenden historischen Daten als Warenkorb behandelt und analysiert werden,
◦ eine Abhängigkeitsstruktur mehrerer Alarme untersucht wird durch Anwendung von Methoden der Multidimensionalen Skalierung (MDS) zum Aufzeigen einer mehr als nur einen Zusammenhang zwischen zwei Alarmen umfassenden Abhängigkeit von Alarmen, und
◦ entsprechende Bündel von Alarmen definiert und zu Gruppen zusammengefasst werden,

• Formulierung von Alarmunterdrückungsregeln zur Reduzierung der Anzahl künftiger Alarmmeldungen auf der Grundlage der so gewonnenen Kenntnisse über die Zusammenhänge zwischen den Alarmmeldungen und zwischen den Alarmmeldungen und den Bedieneingriffen, und
• Reduzierung der Anzahl der Alarmmeldungen durch Anwendung der Alarmunterdrückungsregeln im Rahmen einer Änderung einer Konfiguration des Alarmsystems.

**Claims**

1. Method for reducing the quantity of alarm messages generated from measured values, process variables and/or state messages of an alarm system of a technical installation or of a technical process, having the steps of:

- accessing historical data which relate to alarm messages and operator actions,
- identifying correlations between the alarm messages and between the alarm messages and the operator actions by using methods of shopping-basket analysis, wherein

  ◦ the historical data present in defined intervals are treated and analysed as a shopping basket,
  ◦ a dependent structure of a plurality of alarms is investigated by applying methods of multidimensional scaling (MDS) in order to record a dependence of alarms which comprises more than only one correlation between two alarms, and
  ◦ corresponding bundles of alarms are defined and combined to form groups,

- formulating alarm suppression rules for reducing the number of future alarm messages on the basis of the knowledge thus obtained relating to the correlations between the alarm messages and between the alarm messages and the operator actions, and
- reducing the number of alarm messages by applying the alarm suppression rules in the context of a change to a configuration of the alarm system.

2. Method according to Claim 1, **characterized in that** the correlations between alarm messages and operator actions are used to form quality characteristics from the relationship of the respective operator actions before and after the occurrence of the respective alarm message.

3. Method according to one of the preceding claims, **characterized in that** the results for the analyses are displayed.

4. Method according to one of the preceding claims, **characterized in that** the intervals are formed by subdividing the recorded data in non-overlapping periods of fixed duration, or in temporary overlapping periods of fixed duration which respectively begins with a recorded alarm, or in intervals of different duration, respectively comprising a fixed number of alarm messages.

5. Method according to one of the preceding claims, **characterized in that** the analysis of the historical data is carried out by using the APRIORI algorithm or ECLAT algorithm.

6. Method according to one of the preceding claims, **characterized in that** in accordance with the definition of the alarm suppression rules on the basis of the results of analysis a program-controlled check of the effects of the defined rules is carried out by means of the data processing device, a check being made as to which effects the rules would have had in the case of the recorded data, in particular as to what reduction would have resulted in the number of alarm messages.

7. Method according to one of the preceding claims, **characterized in that** quality characteristics which are a measure of the extent to which an alarm message initiates an operator action are determined on the basis of results from determined correlations between operator actions and alarm messages.

8. Method according to Claim 7, **characterized in that** a quality characteristic is formed in the following steps:

   a) carrying out a prefiltering of the historical data, in which alarm messages occurring a short time after one another are counted as one alarm message, and operator actions following a short time after one another are counted as one operator action, and
   b) calculating a quality characteristic which depends on whether an alarm message initiates an operator action.

9. Data processing device for reducing the quantity of alarm messages generated from measured values, process variables and/or state messages of an alarm system of a technical installation or of a technical process, in which the data processing device has access to recorded historical data relating to alarm messages and operator actions and is suitable for

- identifying correlations between the alarm messages and between the alarm messages and the operator actions by applying methods of shopping-basket analysis, in which

  ◦ the historical data present in defined intervals are treated and analysed as a shopping basket,
  ◦ a dependent structure of a plurality of alarms is investigated by applying methods of multidimensional scaling (MDS) in order to record a dependence of alarms which comprises more than only one correlation between two alarms, and
  ◦ corresponding bundles of alarms are defined and combined to form groups,

• formulating alarm suppression rules for reducing the number of future alarm messages on the basis of the knowledge thus obtained relating to the correlations between the alarm messages and between the alarm messages and the operator actions, and

• reducing the number of alarm messages by applying the alarm suppression rules in the context of a change to a configuration of the alarm system.

## Revendications

**1.** Procédé de réduction du nombre de messages d'alarme générés à partir de valeurs mesurées, de grandeurs de processus et/ou de messages d'état d'un système d'alarme d'une installation technique ou d'un processus technique, comprenant les étapes suivantes

* accès aux données historiques qui concernent les messages d'alarme et les interventions opérationnelles,
* identification des relations entre les messages d'alarme et entre les messages d'alarme et les interventions opérationnelles en appliquant des méthodes de l'analyse du panier de la ménagère,

◦ les données historiques qui se trouvent dans des intervalles définis étant traitées et analysées en tant que panier de la ménagère,
◦ une structure de dépendance de plusieurs alarmes étant analysée en appliquant des méthodes de l'échelonnage multidimensionnel (MDS) pour indiquer une dépendance des alarmes incluant plus d'une seule relation entre deux alarmes, et
◦ des paquets correspondants d'alarmes étant définis et assemblés en groupes,

* formulation de règles d'inhibition d'alarme en vue de réduire le nombre de futurs messages d'alarme sur la base des connaissances ainsi acquises sur les relations entre les messages d'alarme et entre les messages d'alarme et les interventions opérationnelles, et
* réduction du nombre de messages d'alarme en appliquant les règles d'inhibition d'alarme dans le cadre d'une modification d'une configuration du système d'alarme.

**2.** Procédé selon la revendication 1, **caractérisé en ce qu'**à partir des relations entre les messages d'alarme et les interventions opérationnelles sont formés des indices de qualité à partir du rapport entre les interventions opérationnelles respectives avant et après la survenance du message d'alarme correspondant.

**3.** Procédé selon l'une des revendications précédentes, **caractérisé en ce que** les résultats des analyses sont affichés.

**4.** Procédé selon l'une des revendications précédentes, **caractérisé en ce que** les intervalles sont formés en divisant les données enregistrées en périodes qui ne se chevauchent pas ayant une durée fixe ou périodes qui se chevauchent dans le temps ayant une durée fixe, laquelle commence à chaque fois avec une alarme enregistrée, ou en intervalles de durées différentes contenant à chaque fois un nombre fixe de messages d'alarme.

**5.** Procédé selon l'une des revendications précédentes, **caractérisé en ce que** l'analyse des données historiques est effectuée en utilisant l'algorithme APRIORI ou l'algorithme ECLAT.

**6.** Procédé selon l'une des revendications précédentes, **caractérisé en ce qu'**après la définition des règles d'inhibition d'alarme, un contrôle commandé par programme des effets des règles définies est effectué au moyen du dispositif de traitement de données en se basant sur les résultats de l'analyse, le contrôle consistant à vérifier les effets qu'auraient eu les règles dans le cas des données enregistrées, notamment la réduction du nombre de messages d'alarme qui en aurait résulté.

**7.** Procédé selon l'une des revendications précédentes, **caractérisé en ce que** des caractéristiques de qualité, qui sont une indication de la mesure dans laquelle un message d'alarme déclenche une intervention opérationnelle, sont déterminées en se basant sur les résultats des corrélations déterminées entre les interventions opérationnelles et les messages d'alarme.

**8.** Procédé selon la revendication 7, **caractérisé en ce que** la formation d'une caractéristique de qualité s'effectue au cours des étapes suivantes :

a) exécution d'un pré-filtrage des données historiques, les messages d'alarme qui surviennent brièvement les uns après les autres étant comptés comme un seul message d'alarme et les interventions opérationnelles qui surviennent brièvement les unes après les autres étant comptées comme une seule intervention opérationnelle, et
b) calcul d'un indice de qualité qui dépend du déclenchement ou non d'une intervention opérationnelle par un message d'alarme.

**9.** Dispositif de traitement de données destiné à réduire le nombre de messages d'alarme générés à partir de valeurs mesurées, de grandeurs de processus et/ou de messages d'état d'un système d'alarme d'une installation technique ou d'un processus technique, le dispositif de traitement de données possédant un accès aux données historiques enregistrées qui concernent les messages d'alarme et les interventions opérationnelles et étant adapté pour

* identifier les relations entre les messages d'alarme et entre les messages d'alarme et les interventions opérationnelles en appliquant des méthodes de l'analyse du panier de la ménagère,

  ◦ les données historiques qui se trouvent dans des intervalles définis étant traitées et analysées en tant que panier de la ménagère,
  ◦ une structure de dépendance de plusieurs alarmes étant analysée en appliquant des méthodes de l'échelonnage multidimensionnel (MDS) pour indiquer une dépendance des alarmes incluant plus d'une seule relation entre deux alarmes, et
  ◦ des paquets correspondants d'alarmes étant définis et assemblés en groupes,

* formuler des règles d'inhibition d'alarme en vue de réduire le nombre de futurs messages d'alarme sur la base des connaissances ainsi acquises sur les relations entre les messages d'alarme et entre les messages d'alarme et les interventions opérationnelles, et
* réduire le nombre de messages d'alarme en appliquant les règles d'inhibition d'alarme dans le cadre d'une modification d'une configuration du système d'alarme.

| APRIORI algorithm | ECLAT algorithm |
|---|---|
| A668 <- A667 A1453  (1.3, 95.4)<br>A1453 <- A667 A668  (1.3, 91.8) | A667 A668 A1453  (1.5%)<br>A417 A418 A415  (1.7%)<br>A558 A557 A221  (2.8%) |
| A415 <- A417 A418  (1.5, 93.4)<br>A418 <- A417 A415  (1.6, 90.5) | A77 A57 A56  (1.6%)<br>A13 A16 A15  (1.1%)<br>A47 A45 A46  (2.8%) |
| A56 <- A77 A57  (1.2, 83.0) | A19 A16 A15  (1.2%)<br>A41 A16 A15  (1.1%) |
| A221 <- A557 A558  (2.6, 99.1)<br>A558 <- A557 A221  (2.6, 97.6)<br>A557 <- A558 A221  (2.6, 97.1) | A28 A29 A15  (1.1%)<br>A28 A29 A16  (1.3%)<br>A28 A29 A75  (1.2%)<br>A28 A16 A15  (1.1%) |
| A46 <- A47 A45  (1.8, 93.8)<br>A45 <- A47 A46  (2.1, 81.3) | A29 A16 A15  (1.1%)<br>A73 A16 A15  (1.8%)<br>A56 A16 A15  (1.7%) |
| A15 <- A243 A16  (1.4, 72.8)<br>A16 <- A243 A15  (1.5, 70.6) | A243 A16 A15  (2.1%)<br>A75 A16 A15  (3.0%) |
| A16 <- A75 A15  (2.0, 76.0) | |

**Fig. 1**

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SIZU HOU et al.** *Analysis and Research for Network Management Alarms Correlation Based on Sequence Clustering Algorithm*
- **DR. HANS KURZ.** *Alarmmanagement - Ziele, Erfahrungen, Nutzen*
- **MAHANTI A et al.** *Visual Interface for Online Watching of Frequent Itemset Generation in Apriori and Eclat*